# FASCICULE DE BREVET EUROPEEN

(11) **EP 2 962 129 B1**
(45) Date de publication et mention de la délivrance du brevet: **18.03.2020**
(21) Numéro de dépôt: 14713193.2
(22) Date de dépôt: 27.02.2014
(51) Int. Cl.: G01T 1/17, G01T 1/24

(54) **DISPOSITIF DE TRAITEMENT D'UN SIGNAL DELIVRE PAR UN DETECTEUR DE RAYONNEMENT**
VORRICHTUNG ZUR VERARBEITUNG EINES STRAHLUNGSDETEKTORSIGNALS
DEVICE FOR PROCESSING A SIGNAL DELIVERED BY A RADIATION DETECTOR

(30) Priorité: 28.02.2013 FR 1351803
(43) Date de publication de la demande: 06.01.2016
(73) Titulaire: Commissariat à l'Energie Atomique et aux Energies Alternatives, 75015 Paris (FR)
(72) Inventeur: OUVRIER-BUFFET, Patrice, 74410 Saint-Jorioz (FR)
(74) Mandataire: Cabinet Beaumont
(86) Numéro de dépôt international: PCT/FR2014/050435
(87) Numéro de publication internationale: WO 2014/132003

(56) Documents cités:
- WO-A2-03/040757
- WO-A2-03/040757
- FR-A1- 2 977 328
- US-A- 5 225 682
- US-A- 5 225 682
- US-A1- 2005 246 140
- US-A1- 2005 246 140
- US-A1- 2010 207 027
- US-A1- 2010 207 027

## Description

La présente demande de brevet revendique la priorité de la demande de brevet français FR13/51803 qui sera considérée comme faisant partie intégrante de la présente description.

### Domaine

La présente demande concerne des dispositifs de mesure de rayonnements ionisants au moyen d'un détecteur, par exemple formé sur un matériau semiconducteur. Plus particulièrement, la présente demande concerne un circuit électronique adapté à traiter les informations provenant d'un tel détecteur de façon efficace.

### Exposé de l'art antérieur

On s'intéresse ici à des détecteurs susceptibles de détecter un rayonnement ionisant, et en particulier un rayonnement constitué de photons énergétiques, par exemple des rayons X ou gamma d'énergie comprise entre 1 keV et quelques MeV.

De tels détecteurs peuvent être des détecteurs scintillateurs (à base par exemple de NaI, CsI, LaBr₃) ou des détecteurs semiconducteurs (à base par exemple de Ge, Si, CdTe, CdZnTe). On sait que lorsqu'une particule interagit dans un tel détecteur, on peut collecter, aux bornes du détecteur, des charges dont la quantité dépend de l'énergie perdue par la particule au cours de l'interaction avec le matériau.

Par exemple, dans le cas d'un détecteur scintillateur, l'interaction d'une particule produit des photons visibles qu'il est possible de convertir en charges électriques par des photodétecteurs. Dans le cas d'un détecteur à base de semiconducteur, l'interaction d'une particule produit des paires électrons-trous. Il est alors possible de collecter les électrons aux bornes d'une anode, ou des trous aux bornes d'une cathode.

De tels détecteurs ont de nombreuses applications, notamment dans l'imagerie médicale, le contrôle de bagages ou dans l'industrie nucléaire. Pour ces applications, il est courant de mettre en oeuvre une spectrométrie : l'électronique associée au détecteur est prévue de façon à classer les interactions détectées en fonction de l'énergie libérée dans le matériau détecteur pour chaque interaction. On obtient ainsi un spectre en énergie qui représente le nombre d'interactions détectées en fonction de l'énergie.

Un détecteur de photons est souvent constitué d'une matrice de pixels, chaque pixel comprenant une zone de photodétection. Chaque pixel est associé à une électronique de traitement et de comptage des photons détectés par la zone de photodétection associée.

Dans les spectromètres connus, il est courant d'associer à un détecteur un dispositif électronique de mise en forme du signal reçu, la sortie de ce dispositif électronique étant connectée en entrée d'un convertisseur analogique-numérique. Le signal numérique en sortie du convertisseur est ensuite traité par un circuit adapté pour déterminer l'amplitude de chaque impulsion, cette amplitude étant généralement proportionnelle à l'énergie libérée par l'interaction ayant généré cette amplitude. Le circuit effectue ensuite un histogramme du nombre d'impulsions détectées en fonction de leur amplitude, ce qui correspond au spectre en énergie du rayonnement détecté.

Lorsque le détecteur est soumis à un rayonnement incident intense, du fait de la fréquence élevée de réception des photons sur chacun des pixels du photodétecteur, les dispositifs connus nécessitent des convertisseurs analogique-numérique particulièrement performants, associés à des circuits de traitement qui peuvent être, par exemple, des microprocesseurs, des circuits logiques programmables (FPGA, de l'anglais "Field Programmable Gate Array"), ou des circuits intégrés spécifiques (circuit ASIC, en anglais "Application Specific Integrated Circuit").

L'utilisation de tels dispositifs particulièrement performants implique des coûts de réalisation des détecteurs très élevés. En outre, l'utilisation de convertisseurs analogique-numérique rapides et performants n'est pas compatible avec la formation de détecteurs de faibles surfaces.

Les documents US2005/0246140 et US5225682 décrivent des exemples de méthodes et dispositifs de traitement de signaux délivrés par des détecteurs de rayonnements.

### Résumé

Un objet d'un mode de réalisation est de prévoir un détecteur de rayons énergétiques efficace et susceptible d'être intégré dans un volume réduit.

Ainsi, un mode de réalisation prévoit un dispositif de traitement d'informations délivrées par un détecteur de photons, selon la revendication 1.

Selon un mode de réalisation, les condensateurs ont chacun leur première électrode reliée à un deuxième noeud par l'intermédiaire d'un interrupteur de lecture.

Selon un mode de réalisation, le dispositif comprend en outre un convertisseur analogique-numérique adapté à recevoir une valeur fournie sur le deuxième noeud.

Selon un mode de réalisation, le circuit de contrôle est adapté à commander les interrupteurs de lecture de façon à fournir périodiquement sur le deuxième noeud l'une des valeurs enregistrées dans les condensateurs.

Selon un mode de réalisation, un indicateur d'occupation est associé à chaque condensateur de l'élément de capture.

Selon un mode de réalisation, le circuit de contrôle est adapté à commander les interrupteurs d'écriture de façon à enregistrer la valeur du premier signal dans l'un des condensateurs associés à un indicateur d'occupation à un état libre, lorsque le deuxième signal passe du premier au deuxième état.

Selon un mode de réalisation, le circuit de contrôle est adapté à faire fonctionner les condensateurs à la manière d'une file de type FIFO.

Selon l'invention revendiquée le circuit de détermination comprend un soustracteur dont les entrées reçoivent le premier signal et le premier signal retardé d'une durée prédéterminée par une ligne à retard, la sortie du soustracteur étant connectée sur une première entrée d'un comparateur dont une deuxième entrée reçoit une tension de référence.

Selon un mode de réalisation, la durée prédéterminée est inférieure à 10 ns.

Selon l'invention revendiquée la sortie de l'amplificateur opérationnel fournit le deuxième signal.

En outre, un mode de réalisation ne faisant pas partie de l'invention revendiquée prévoit un dispositif de traitement d'informations délivrées par un détecteur de photons, comprenant : un circuit analogique de génération d'un signal présentant une série d'impulsions, chaque impulsion ayant une amplitude proportionnelle à l'énergie libérée par une interaction d'un photon dans le détecteur ; un circuit analogique de détermination de l'instant auquel l'amplitude d'une impulsion du signal est maximale ; et un élément de capture de la valeur du signal à cet instant.

Selon un mode de réalisation ne faisant pas partie de l'invention revendiquée, l'élément de capture comprend au moins une cellule mémoire.

Selon un mode de réalisation ne faisant pas partie de l'invention revendiquée, le dispositif comprend en outre un convertisseur analogique-numérique adapté à recevoir une valeur capturée par l'élément de capture.

Selon un mode de réalisation ne faisant pas partie de l'invention revendiquée, la sortie de l'amplificateur opérationnel est associée à un dispositif de commande en écriture et lecture de l'élément de capture.

Selon un mode de réalisation ne faisant pas partie de l'invention revendiquée, l'élément de capture comprend un condensateur dont une première borne est connectée à un potentiel fixe, par exemple la masse, et dont une deuxième borne est connectée à un interrupteur d'écriture et un interrupteur de lecture commandés par le dispositif de commande.

Selon un mode de réalisation ne faisant pas partie de l'invention revendiquée, l'élément de capture comprend un ensemble de cellules mémoire, l'écriture du signal étant réalisée à chacun des instants dans une cellule mémoire libre de l'ensemble.

Selon un mode de réalisation ne faisant pas partie de l'invention revendiquée, chaque cellule mémoire est associée à un indicateur d'occupation.

Un mode de réalisation ne faisant pas partie de l'invention revendiquée, prévoit en outre un dispositif de traitement d'informations délivrées par un détecteur de photons, comprenant : un circuit analogique de génération d'un signal d'énergie présentant une série d'impulsions, chaque impulsion ayant une amplitude proportionnelle à l'énergie libérée par une interaction d'un photon dans le détecteur ; un circuit analogique de détermination d'un instant de capture, en fonction de la variation temporelle du signal d'énergie ; et un circuit de capture de la valeur prise par le signal d'énergie à l'instant de capture.

Selon un mode de réalisation ne faisant pas partie de l'invention revendiquée, le dispositif comprend en outre un premier interrupteur reliant le circuit de génération du signal au circuit de capture.

Selon un mode de réalisation ne faisant pas partie de l'invention revendiquée, le circuit analogique de détermination d'un instant de capture est apte à déterminer la variation temporelle du signal d'énergie, et à comparer la variation temporelle à une valeur prédéterminée, de façon à émettre un signal de commande dépendant de cette comparaison.

Selon un mode de réalisation ne faisant pas partie de l'invention revendiquée, l'instant de capture correspond à l'instant auquel la valeur du signal d'énergie atteint un maximum.

Selon un mode de réalisation ne faisant pas partie de l'invention revendiquée, le premier interrupteur est disposé entre le circuit de capture et le circuit analogique de génération du signal, l'interrupteur étant apte à être ouvert à l'instant de capture.

Selon un mode de réalisation ne faisant pas partie de l'invention revendiquée, le circuit de capture comprend une cellule mémoire dans laquelle est stockée la valeur du signal d'énergie à l'instant de capture.

Selon un mode de réalisation ne faisant pas partie de l'invention revendiquée, la cellule mémoire est une cellule mémoire analogique, et comporte en particulier une capacité disposée entre le premier interrupteur et un deuxième interrupteur de lecture.

Selon un mode de réalisation ne faisant pas partie de l'invention revendiquée, le circuit de capture comprend une pluralité de cellules mémoires agencées en parallèle.

Selon un mode de réalisation ne faisant pas partie de l'invention revendiquée, le dispositif comporte en outre un convertisseur analogique-numérique, agencé pour recevoir une valeur stockée dans la cellule mémoire.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue schématique d'un spectromètre ;
les figures 2, 3 et 4 sont des chronogrammes illustrant le fonctionnement du spectromètre de la figure 1 ;
la figure 5 illustre un phénomène de recouvrement d'impulsions qui peut se poser avec le dispositif de la figure 1 ;
la figure 6 illustre un détecteur et son circuit électronique associé selon un mode de réalisation ;
les figures 7A à 7E illustrent le fonctionnement du dispositif de la figure 6 ;
la figure 8 illustre une variante du dispositif de la figure 6 ; et
les figures 9A à 9J illustrent le fonctionnement du dispositif de la figure 8.

Par souci de clarté, de mêmes éléments ont été désignés par de mêmes références aux différentes figures.

### Description détaillée

La spectrométrie des rayonnements ionisants consiste à mesurer avec la plus grande précision possible l'énergie de chaque interaction du rayonnement dans un détecteur puis à tracer le spectre en énergie des interactions détectées.

On parlera ici d'un rayonnement ionisant de type rayonnement de photons X ou gamma, mais il pourrait s'agir également d'un autre type de rayonnement, par exemple α ou β.

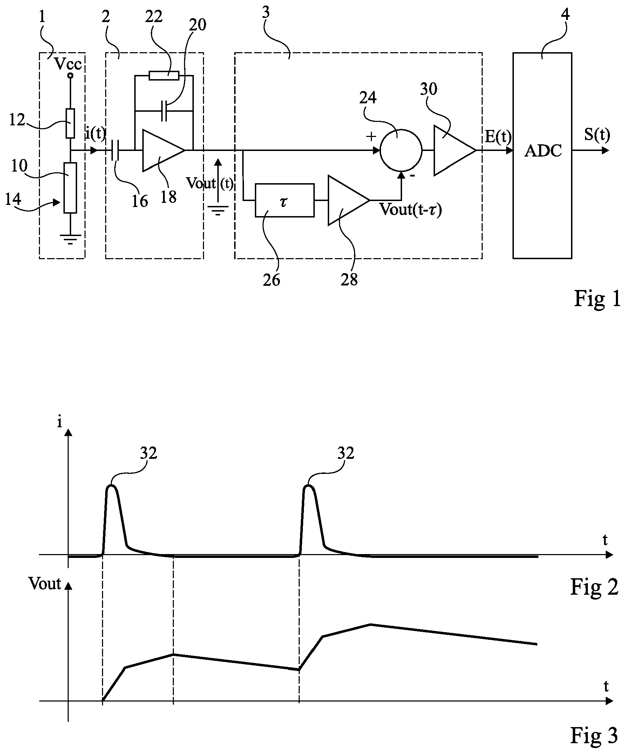

La figure 1 illustre schématiquement un spectromètre comprenant un système de détection de photons énergétiques associé à un circuit électronique.

Ce système comprend un dispositif de détection de photons 1, un circuit électronique de proximité 2 qui convertit le signal en courant délivré par le dispositif de détection 1 en un signal en tension, un circuit électronique de traitement 3 (filtrage, amplificateur...) qui traite le signal délivré par le circuit électronique de proximité 2 et un convertisseur analogique-numérique 4 (ADC) qui numérise les signaux analogiques délivrés par le circuit électronique 3. Le signal issu du convertisseur 4 est ensuite utilisé pour obtenir le spectromètre correspondant aux photons incidents.

Le détecteur de photons 1 comprend un bloc de matériau semiconducteur 10 connecté à une borne d'application d'une tension d'alimentation Vcc par l'intermédiaire d'une résistance 12.

On notera que le bloc de matériau semiconducteur 10 illustré en figure 1 peut correspondre en pratique à un pixel d'une matrice de détecteurs élémentaires de photons formée sur une tranche semiconductrice. Dans chaque pixel de cette matrice, une portion du matériau semiconducteur est prévue pour collecter des charges photogénérées par un faisceau ionisant incident 14. On notera en outre que la description faite ici s'applique indifféremment à des détecteurs semiconducteurs ou scintillateurs.

Le choix de l'épaisseur et de la surface de la zone de collecte de charges d'un détecteur semiconducteur dépendent de l'efficacité de détection et de la sensibilité attendue du système. A titre d'exemple non limitatif, une épaisseur inférieure au millimètre suffit à arrêter la plus grande partie des photons de basse énergie (inférieure à 100 keV). Par contre, pour des photons de haute énergie (supérieure à 100 keV), une épaisseur de quelques millimètres, voire de 1 cm, peut être nécessaire.

Un détecteur d'épaisseur importante permet d'arrêter un maximum de photons mais diminue le taux de comptage possible car le temps de transit des charges dans le détecteur augmente proportionnellement à son épaisseur. Dans le cas d'une détection de photons de hautes énergies, une tension de polarisation Vcc élevée peut être nécessaire pour augmenter l'efficacité du détecteur tout en maintenant un temps de transit faible. On notera que le choix du matériau semiconducteur formant la tranche semiconductrice sur laquelle est défini le bloc 10 ainsi que les dimensions de la zone de collecte de charges, ne seront pas décrits plus en détail ici. A titre d'exemple non limitatif, le matériau semiconducteur du détecteur peut être du CdZnTe, ou des cristaux de CdTeCl ou de CdTeIn.

Le dispositif de détection de photons 1 comprend donc, entre la borne d'alimentation Vcc et une borne connectée à la masse, une association série d'une résistance 12 et du bloc semiconducteur 10. Le point milieu de cette association série est connecté en entrée du circuit électronique de proximité 2.

Le circuit électronique de proximité 2 assure un rôle de préamplificateur de charge. Le circuit 2 comprend un premier condensateur 16 dont une première borne est connectée en entrée du circuit 2. La seconde borne du condensateur 16 est connectée en entrée d'un amplificateur 18 dont la sortie forme la sortie du circuit électronique de proximité 2. Entre les bornes d'entrée et de sortie de l'amplificateur 18 sont placés, en parallèle, un deuxième condensateur 20 et une résistance 22. La tension en sortie du circuit de proximité 2 est appelée Vout.

Le circuit électronique de traitement 3 reçoit la tension Vout sur son entrée. La borne d'entrée du circuit 3 est connectée directement à la borne positive d'un soustracteur 24. La borne d'entrée du circuit 3 est également connectée en entrée d'une première ligne à retard 26 d'une durée τ. La sortie de la ligne à retard 26 est connectée en entrée d'un atténuateur 28 (gain inférieur à 1) dont la sortie est connectée sur l'entrée inverseuse du soustracteur 24. La sortie du soustracteur 24 est connectée en entrée d'un amplificateur 30 à grand gain (supérieur à 1) et la sortie de l'amplificateur 30 est appelée signal d'énergie E(t) et constitue la sortie du circuit électronique de traitement 3.

Le convertisseur analogique-numérique 4 (ADC) convertit le signal analogique E(t) en un signal numérique S(t), échantillonné sur une fréquence d'horloge.

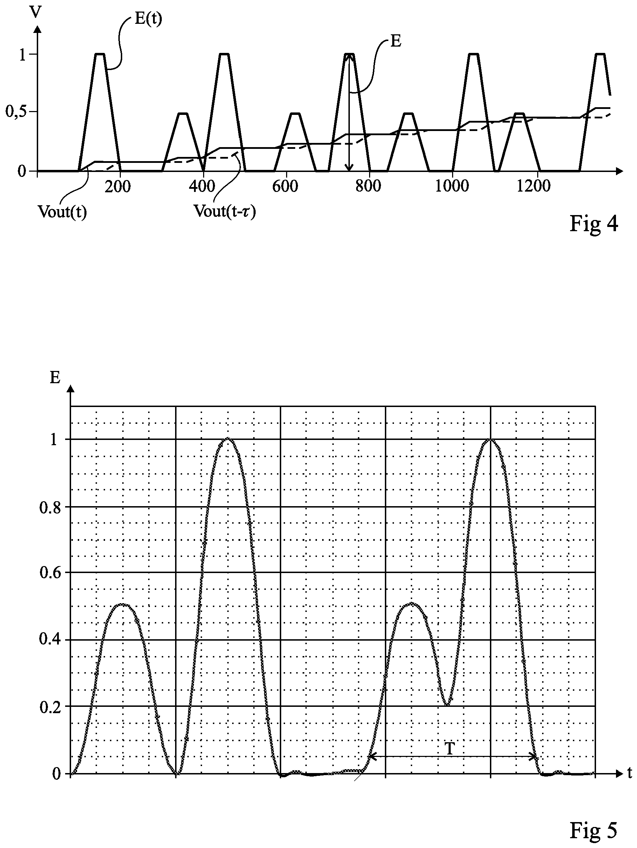

Les figures 2, 3 et 4 sont des chronogrammes illustrant le fonctionnement du dispositif de la figure 1. Plus particulièrement, la figure 2 illustre un exemple de signal i issu du dispositif de détection de photons 1 (en entrée du circuit 2), la figure 3 illustre le signal Vout correspondant, et la figure 4 illustre des exemples de signaux Vout(t), Vout(t-τ) en sortie de l'amplificateur 28 et du signal d'énergie E(t) correspondant.

Lors de la réception d'un photon 14, de nombreuses paires électrons/trous sont générées dans le bloc semiconducteur 10. Le transfert de ces paires électrons/trous se retrouve sous forme d'une impulsion en courant 32 sur le signal de sortie i(t). La quantité de charges transférées est directement image de l'énergie du photon incident, ou plus précisément de l'énergie libérée par le photon incident dans le détecteur au cours d'une interaction.

A chaque apparition d'une impulsion 32 sur le signal i(t), comme on peut le voir en figure 3, la tension Vout en sortie du circuit électronique de proximité 2 augmente, puis, pendant une période de relaxation avant une autre impulsion, diminue légèrement.

L'amplitude de chacune des augmentations de la tension Vout à l'apparition d'une impulsion 32 correspond directement à la quantité de charges photogénérées par le photon incident. En effet, l'amplitude de la tension Vout à l'apparition d'un pic de courant sur le signal i(t) est égale au rapport entre la quantité de charges formées par le photon qui interagit dans le pixel du détecteur et la capacité du condensateur 20.

Cependant, comme cela est illustré en figure 3, en sortie du circuit électronique de proximité 2, l'information Vout qui correspond à l'énergie du photon détecté est fugitive car le préamplificateur se décharge après l'apparition de l'impulsion (la tension Vout diminue entre deux impulsions). Le circuit électronique de traitement 3 assure la mesure de l'énergie du photon incident par mesure de l'amplitude de l'augmentation du signal Vout, en évitant la phase de relaxation, comme cela sera décrit ci-après en relation avec la figure 4.

La figure 4 reprend un exemple du signal Vout(t). Cette figure illustre également le signal en sortie de la ligne à retard 26, Vout (t-τ). En figure 4 est également illustré le signal d'énergie en sortie du circuit électronique de traitement 3, E(t).

Comme on le voit sur le chronogramme de la figure 4, à chaque augmentation de la valeur du signal Vout, le signal d'énergie E(t) comporte une impulsion dont l'amplitude est proportionnelle à la charge collectée aux bornes du détecteur 1, c'est-à-dire proportionnelle à l'énergie cédée par le photon détecté dans le matériau semiconducteur. Pour obtenir cet effet, le temps de retard τ de la première ligne à retard 26 doit être supérieur au temps de montée du signal Vout. En effet, cela permet que le signal d'énergie E(t) atteigne une valeur maximale à la fin du temps de montée Vout(t) avant le début de la montée du signal Vout(t-τ). Le signal d'énergie E(t) est appelé signal d'énergie car il est constitué d'impulsions, chaque impulsion correspondant à la détection d'une interaction dans le détecteur, et ayant une amplitude proportionnelle à la quantité de charges collectée au cours de l'interaction.

On notera que la détermination précise de la durée τ de la ligne de retard 26 ne sera pas décrite plus en détail ici et est à la portée de l'homme de l'art par des ajustements successifs du fonctionnement du circuit électronique de traitement 3.

Le signal d'énergie E(t) est ensuite numérisé avec un convertisseur analogique-numérique 4, et le signal S(t) est connecté en entrée d'un dispositif de traitement tel qu'un FPGA ou un circuit ASIC pour détecter les valeurs maximales de ce signal numérique et former le spectromètre.

La figure 5 reprend un exemple d'un signal d'énergie E(t) susceptible d'être obtenu à l'aide du dispositif de la figure 1, et un inconvénient d'un tel circuit.

En effet, dans un circuit tel que proposé ci-dessus, l'apparition des impulsions sur le signal i(t) est aléatoire. Ainsi, il se peut que deux impulsions apparaissent très rapprochées l'une de l'autre, ce qui implique un recouvrement des impulsions obtenues sur le signal d'énergie E(t), comme on peut le voir en figure 5, et donc sur le signal échantillonné S(t).

Si la fréquence d'horloge du convertisseur analogique-numérique est faible, ou si les impulsions se recouvrant sont très proches, les recouvrements peuvent amener à des mesures parasites. Ces mesures correspondant au cumul des énergies libérées par des interactions trop rapprochées. Pour éliminer ces mesures parasites, on peut prévoir de comparer le signal d'énergie E(t) à un seuil positif proche de zéro et de mesurer la durée du signal d'énergie E(t) lorsqu'il est supérieur à ce seuil. Si cette durée dépasse une durée seuil, comme c'est le cas par exemple en figure 5 pour la dernière impulsion double qui a une durée T, la mesure est éliminée et le maximum de tension mesurée sur le signal S(t) est éliminé du spectromètre.

Un inconvénient de cette méthode est que, lorsque de nombreuses impulsions correspondant à des arrivées de photons sont très proches dans le temps, un grand nombre de mesures peuvent être éliminées du spectromètre. Il en résulte que les mesures peuvent être faussées par cette sélection.

En outre, un autre inconvénient des dispositifs proposés jusqu'ici est que ceux-ci nécessitent l'utilisation de convertisseurs analogique-numérique particulièrement puissants et fonctionnant à des fréquences d'échantillonnage élevées pour traiter avec une rapidité suffisante l'ensemble des informations contenues dans le signal d'énergie E(t).

On prévoit ici de modifier le circuit analogique situé en amont du convertisseur analogique-numérique de façon que celui-ci convertisse uniquement les informations correspondant aux pics sur le signal d'énergie E(t). En outre, on prévoit un circuit permettant de s'affranchir des problèmes de recouvrement mentionnés ci-dessus.

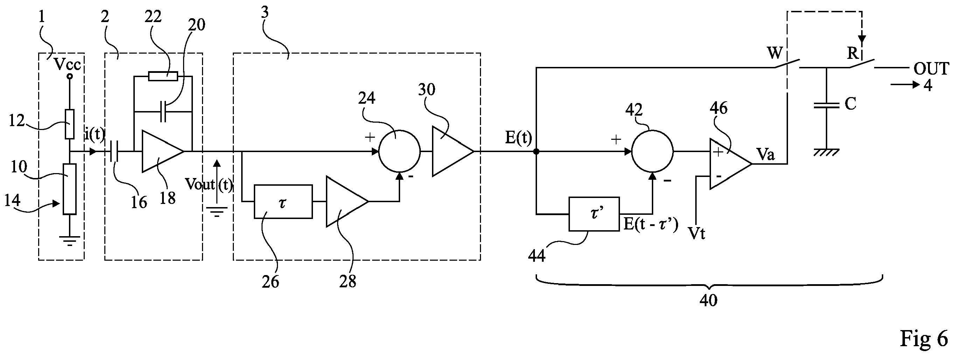

La figure 6 illustre un spectromètre comprenant un circuit électronique répondant à cette problématique.

Le dispositif de la figure 6 comprend, de la même façon que le dispositif de la figure 1, un dispositif de détection de photons 1, un circuit électronique de proximité 2 et un circuit électronique de traitement 3.

Ainsi, le circuit électronique relié au détecteur comprend :
- un circuit de proximité 2, ou préamplificateur, délivrant des impulsions Vₒᵤₜ(t) sous l'effet de la collecte de charges aux bornes du détecteur, en réponse à une interaction dans le détecteur ; et
- un circuit électronique de traitement 3, disposé en aval du circuit de proximité 2, apte à produire un signal d'énergie E(t), constitué par des impulsions dont l'amplitude dépend de la quantité de charge collectée au cours de chaque interaction.

En outre, le circuit électronique de traitement 3 comporte en outre :
- un premier circuit à ligne à retard 26 pour décaler temporellement une impulsion Vₒᵤₜ(t) produite par le préamplificateur 2, ce circuit étant apte à générer une impulsion décalée temporellement d'une durée τ, Vout(t-τ) ; et
- un premier soustracteur 24, apte à réaliser une différence entre l'impulsion Vₒᵤₜ(t) et l'impulsion décalée temporellement Vₒᵤₜ (t-τ), ce premier soustracteur étant apte à délivrer un signal d'énergie E(t) dont l'amplitude dépend de la quantité de charge ayant généré l'impulsion Vout(t).

Le circuit électronique relié au détecteur comprend en outre un circuit analogique 40 dont l'entrée est connectée au signal d'énergie E(t) du circuit électronique de traitement 3 et dont la sortie OUT est prévue pour être connectée en entrée d'un convertisseur analogique-numérique (non représenté en figure 6).

Le circuit 40 comprend un soustracteur 42 dont l'entrée non-inverseuse reçoit le signal d'énergie E(t). L'entrée inverseuse du soustracteur 42 reçoit le signal d'énergie E(t) retardé d'une durée τ', appelé ici signal d'énergie retardé E(t-τ'). Ce signal retardé est obtenu à l'aide d'une deuxième ligne à retard 44 dont l'entrée est connectée à la sortie E(t) du bloc 3.

La sortie du soustracteur 42 est connectée sur la borne non-inverseuse d'un amplificateur opérationnel 46 monté en comparateur, la borne inverseuse de l'amplificateur opérationnel 46 étant connectée à un générateur d'une tension de seuil Vt, négative et proche de zéro. La tension de seuil Vt est choisie inférieure à la tension de bruit présente en sortie du soustracteur 42, afin d'éviter des déclenchements intempestifs en l'absence d'interaction détectée.

La sortie Va (appelée signal de commande) de l'amplificateur opérationnel 46, monté en comparateur, commande un premier interrupteur d'écriture W (par exemple par l'intermédiaire d'un dispositif de commande séparé).

Le premier interrupteur d'écriture W permet la connexion du circuit 3 de génération du signal d'énergie E à un circuit de capture, le circuit de capture étant apte à capturer la valeur prise par le signal d'énergie E(t) à un instant de capture. Le circuit de capture peut être destiné à mémoriser cette valeur, auquel cas il agit en tant que circuit de mémorisation. La valeur peut par exemple être mémorisée dans l'attente de sa numérisation par un convertisseur analogique numérique disposé en aval du circuit de capture. Le circuit de capture peut également être un circuit pour numériser la valeur stockée, sans mémorisation préalable.

Dans l'exemple représenté en figure 6, une première borne du premier interrupteur d'écriture W est connectée à la sortie E(t) du circuit 3 et une seconde borne du premier interrupteur d'écriture W est connectée à une première électrode d'un condensateur C dont la seconde électrode est connectée à la masse. La seconde borne du premier interrupteur d'écriture W est également connectée à une première borne d'un deuxième interrupteur de lecture R dont la seconde borne forme la borne de sortie OUT du circuit 40. Cette sortie OUT peut être connectée à des circuits de traitement annexes, par exemple un convertisseur analogique-numérique.

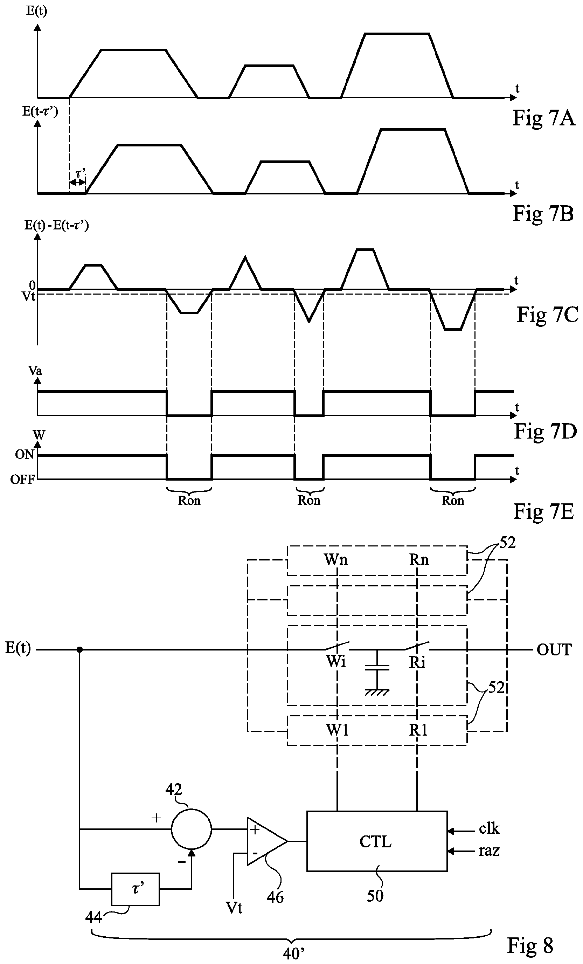

Le fonctionnement du dispositif de la figure 6 sera décrit ci-après en relation avec les chronogrammes des figures 7A à 7E. Plus particulièrement, le chronogramme de la figure 7A illustre un exemple d'un signal d'énergie E(t), le chronogramme de la figure 7B illustre un exemple du signal en sortie de la ligne à retard 44 (E(t-τ')), le chronogramme de la figure 7C illustre le signal en sortie du soustracteur 42 (E(t)-E(t-T')), le chronogramme de la figure 7D illustre le signal de commande Va en sortie de l'amplificateur opérationnel 46 et le chronogramme de la figure 7E illustre l'état du premier interrupteur d'écriture W.

Dans l'exemple représenté, le signal d'énergie E(t) (figure 7A) présente trois impulsions successives de durées et d'amplitudes distinctes, correspondant à trois interactions différentes dans le détecteur. Contrairement à ce qui est représenté dans ce chronogramme, les temps de montée et de descente des impulsions sont négligeables ; ils sont illustrés dans les chronogrammes comme étant relativement long pour une meilleure compréhension. Le signal sur le chronogramme de la figure 7B est identique au signal sur le chronogramme de la figure 7A excepté en ce que celui-ci est décalé dans le temps du temps τ'.

Comme on peut le voir en figure 7C, à chaque début d'impulsion sur le signal E, le signal en sortie du soustracteur 42 devient positif. A chaque diminution du signal E, le signal en sortie du soustracteur 42 devient négatif.

Le seuil Vt est choisi négatif et proche de 0 de façon à détecter les instants où la tension en sortie de la ligne à retard devient négative (fin d'impulsion sur le signal d'énergie E(t)). Ceci implique que le signal de commande Va est à 1 jusqu'au début de chaque pente descendante du signal d'énergie E(t) en fin d'impulsion. Le signal de commande Va est ensuite à zéro, lorsque le signal E(t-τ') amorce une baisse, et repasse à 1 à chaque nouvelle attente d'impulsion sur le signal E.

Ce fonctionnement implique que l'interrupteur d'écriture W est fermé (ON) jusqu'à la fin de chaque période d'impulsion, ouvert ensuite (OFF), et redevient fermé une fois que le signal retardé par le bloc 44 revient à un état haut.

On notera que, en remplacement d'un amplificateur opérationnel monté en comparateur 46 comme cela a été décrit ci-dessus, on pourra également prévoir d'utiliser un amplificateur opérationnel 46 monté en hystérésis. Celui-ci sera prévu de façon que sa sortie Va passe à zéro à chaque fin d'impulsion sur le signal d'énergie E(t) et passe de nouveau à 1 à chaque début d'impulsion sur le signal d'énergie E(t), c'est-à-dire lorsque le signal en sortie du soustracteur 42 redevient positif. On notera que le fonctionnement du dispositif proposé ici est similaire dans le cas où l'on remplace le comparateur 46 par un comparateur à hystérésis.

Comme cela est illustré en figure 7E, pendant les phases où l'interrupteur d'écriture W est ouvert (OFF), on prévoit de fermer l'interrupteur de lecture R (Ron) de façon que celui-ci assure la lecture de la charge stockée dans la capacité C par le convertisseur analogique-numérique, ou tout autre circuit de traitement placé en sortie du dispositif. Pour cela, le deuxième interrupteur de lecture R peut être prévu de façon à être ouvert simultanément à la fermeture du premier interrupteur d'écriture W ou être commandé indépendamment par le dispositif de commande.

Autrement dit, la capacité C agit comme une mémoire analogique dont la phase d'écriture correspond à la capture d'une valeur du signal d'énergie E(t) en fonction du signal de commande Va(t), ce dernier commandant l'ouverture de l'interrupteur d'écriture W à un instant de capture, l'instant de capture correspondant à l'instant auquel le signal d'énergie E(t) atteint un maximum. Ainsi, la mémoire analogique stocke le signal Emax(t) qui correspond à l'amplitude maximum d'une impulsion formée par le signal d'énergie E(t). Comme précédemment indiqué, la valeur Emax(t) est proportionnelle à l'énergie de l'interaction détectée.

L'interrupteur d'écriture W est alors maintenu ouvert jusqu'à la lecture de la mémoire, c'est-à-dire jusqu'à la fermeture de l'interrupteur de lecture R, le signal étant alors transmis à un circuit de traitement externe, par exemple un convertisseur analogique numérique.

On notera que, pour que le circuit 40 fonctionne correctement, la durée τ' doit être choisie très faible, typiquement inférieure à 10 ns, et de préférence comprise entre 5 et 10 ns. La durée τ' est de préférence au moins deux fois inférieure au temps de montée du signal Vₒᵤₜ. Par exemple, si le temps de montée de Vₒᵤₜ est de 10 ns, on choisit τ' < 5 ns, par exemple τ' = 1 ns.

Ainsi, d'une façon générale, le circuit électronique relié au détecteur comprend, en aval du circuit de traitement 3 précédemment décrit :
- un premier interrupteur W pour transmettre le signal d'énergie E(t) à un circuit de traitement aval, tel qu'un convertisseur analogique numérique ;
- un circuit de commande du premier interrupteur apte à générer un signal de commande Va de l'interrupteur, en fonction de la variation temporelle du signal d'énergie E(t).

En outre, le circuit de commande comprend :
- un deuxième circuit à ligne à retard 44 pour décaler temporellement le signal d'énergie E(t) délivré par le circuit de traitement 3 et générer un signal d'énergie temporellement décalé E (t-τ') ;
- un deuxième soustracteur 42 apte à produire un signal représentant la différence entre le signal d'énergie E(t) et le signal d'énergie temporellement décalé E(t-τ') ; et
- un comparateur 46 apte à générer un signal de commande Va(t) en fonction de la différence entre le signal d'énergie E(t) et le signal d'énergie temporellement décalé E(t-τ'), cette différence représentant la variation temporelle du signal E(t).

Le signal de commande Va est destiné à activer un circuit de capture lorsque la variation temporelle atteint une valeur prédéterminée. Dans l'exemple décrit, le circuit de capture est activé lorsque le signal d'énergie est maximal. En outre, le circuit de capture comprend une mémoire analogique C apte à stocker une valeur du signal d'énergie E(t) à l'instant où l'amplitude de ce dernier est maximale. Cet instant peut être appelé instant de capture. Ainsi, le circuit comportant la ligne à retard 44, le soustracteur 42 et le comparateur 46 fournissant le signal Va forment un circuit de détection d'impulsions, dont la sortie est utilisée pour commander l'interrupteur W de l'élément de capture.

Pour améliorer encore la structure de stockage des données issues du dispositif de la figure 6, on peut également prévoir d'utiliser non pas une seule association d'un interrupteur d'écriture W et d'un interrupteur de lecture R encadrant une capacité C de stockage mais un ensemble de plusieurs structures de stockage similaires en parallèle, qui peuvent être couplées à un même circuit de détection d'impulsions. Notamment, cela peut permettre de stocker un nombre plus important de données reçues en parallèle et d'utiliser un convertisseur analogique-numérique associé à un système de lecture synchronisé venant lire les états de tension stockés dans chacune des capacités l'une après l'autre.

Ce dispositif amélioré selon un mode de réalisation ne faisant pas partie de l'invention actuellement revendiquée, est représenté en figure 8. Plus particulièrement, la figure 8 reprend seulement un bloc 40' placé en remplacement du bloc 40 de la figure 6.

Dans la variante de la figure 8, le signal de commande Va n'est pas utilisé directement en commande d'un interrupteur d'écriture W mais en entrée d'un contrôleur ou dispositif de commande 50 (CTL). Le contrôleur 50 reçoit également une entrée d'horloge, clk, et une entrée de remise à zéro, raz. Avantageusement, l'entrée d'horloge clk peut être la même que celle utilisée pour synchroniser le convertisseur analogique-numérique connecté sur la sortie OUT du dispositif.

Dans cette variante, le point mémoire constitué de l'interrupteur W, de l'interrupteur R et de la capacité C est remplacé par un ensemble de points mémoire 52 formés en parallèle. Chaque point mémoire comprend un interrupteur d'entrée Wi (i∈[1, ..., n]) et un interrupteur de sortie Ri connectés à une première électrode d'un condensateur Ci dont la seconde électrode est connectée à la masse. Les interrupteurs Wi sont connectés à la borne recevant le signal d'énergie E(t) et les interrupteurs Ri sont connectés à la sortie OUT.

Le contrôleur 50 contrôle l'activation de l'ensemble des interrupteurs Wi et Ri. Il est prévu pour faire fonctionner l'ensemble des points mémoire 52 à la manière d'une file de type FIFO (premier entré, premier sorti, de l'anglais "First In First Out"). A chaque passage à l'état bas du signal de commande Va, le contrôleur 50 est prévu pour laisser ouvert (OFF) l'ensemble des interrupteurs d'écriture Wi excepté l'un d'entre eux. Ainsi, l'état du signal d'énergie E(t) à cet instant est stocké dans la capacité Ci correspondante. L'interrupteur Wi est ensuite ouvert et le point mémoire de rang i stocke la valeur maximale sur le signal d'énergie E(t) lors de l'impulsion. Autrement dit, le signal de commande Va généré par le circuit 40 pilote l'état des interrupteurs Wi par l'intermédiaire du dispositif de commande 50.

A l'apparition de l'impulsion suivante, c'est-à-dire lorsque le signal de commande Va passe de nouveau à l'état bas, un autre point mémoire 52 est activé de façon que la valeur maximale de l'impulsion sur le signal d'énergie E(t) soit stockée sur une autre capacité Cj.

Côté lecture, c'est-à-dire du côté des interrupteurs Ri, il est prévu que ces interrupteurs soient ouverts de façon synchronisée avec le signal d'horloge clk pour que le convertisseur analogique-numérique placé en sortie du dispositif ne lise qu'une seule des données stockées dans les condensateurs Ci à la fois, et ce à chaque impulsion d'horloge clk.

On peut également prévoir un système plus complexe dans lequel chaque point mémoire 52 est associé à un indicateur d'occupation Ji. Cet indicateur d'occupation Ji est à un premier état, par exemple à l'état haut, lorsqu'une donnée est stockée dans la capacité Ci correspondante, et à un deuxième état, par exemple à l'état bas, lorsqu'aucune donnée n'est stockée dans la capacité associée.

A chaque écriture dans une des capacités Ci, c'est-à-dire à chaque activation d'un interrupteur Wi, le signal Ji correspondant passe à l'état haut. A chaque étape de lecture de cette cellule mémoire qui a été écrite, c'est-à-dire à chaque fois que l'interrupteur Ri associé est fermé, le signal Ji passe à l'état bas. Ainsi, le contrôleur peut gérer l'occupation des différents points mémoire de façon que seuls les points mémoire occupés soient lus et envoient les données stockées dans la capacité Ci correspondante vers le convertisseur analogique-numérique (sortie OUT).

Avantageusement, la mise en parallèle de l'ensemble des points mémoire proposée en figure 8 assure la réalisation d'une lecture synchrone par le convertisseur analogique-numérique des valeurs maximales de différentes impulsions sur le signal d'énergie E(t), images des énergies des photons considérés. Comme nous l'avons vu précédemment, les impulsions détectées par le dispositif de détection de photons 1 peuvent être plus ou moins proches les unes des autres. L'utilisation d'une file formée de plusieurs points mémoire 52 permet de resynchroniser ces impulsions sur le signal d'horloge du convertisseur analogique-numérique. En outre, en dimensionnant correctement la taille de la file constituée des points mémoire 52, on obtient un dispositif particulièrement performant dans lequel l'ensemble des points mémoire est successivement rempli et vidé.

Avantageusement, le dispositif proposé ici permet l'utilisation d'un convertisseur analogique-numérique connecté sur la sortie OUT de dimensions compatibles avec la réalisation d'un dispositif complet présentant une surface inférieure à quelques millimètres carrés. En effet, il n'est pas nécessaire d'associer le dispositif proposé ici à un convertisseur analogique-numérique très performant puisque l'ensemble du signal E n'est pas converti en signal numérique : seules les valeurs stockées dans les points mémoires 52 qui sont directement image de l'énergie des photons reçus sont converties de façon à former un spectromètre du faisceau de rayonnement ionisant incident.

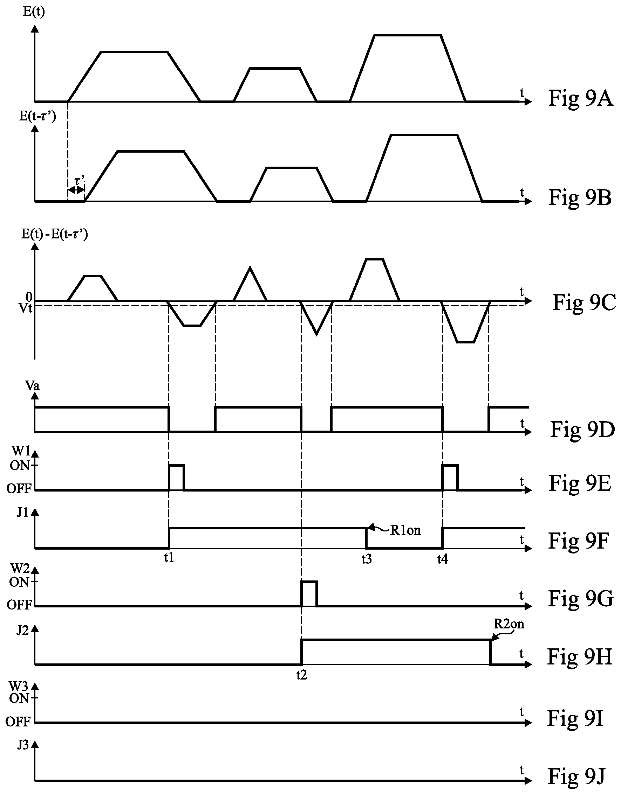

Les figures 9A à 9J reprennent des chronogrammes illustrant le fonctionnement du dispositif de la figure 8. Plus particulièrement, les chronogrammes des figures 9A à 9D reprennent les chronogrammes des figures 7A à 7D et les chronogrammes des figures 9E à 9J illustrent l'état respectivement de l'interrupteur W1, de l'indicateur d'occupation J1, de l'interrupteur W2, de l'indicateur d'occupation J2, de l'interrupteur W3 et de l'indicateur d'occupation J3.

Comme cela est illustré dans ces chronogrammes, lorsque le signal de commande Va présente un front descendant, c'est-à-dire que le signal en sortie du soustracteur 42 passe en dessous du seuil Vt, le contrôleur contrôle l'interrupteur W1 en fermeture (état haut ON). Ceci permet de stocker l'état du signal E sur la capacité C1 de la première cellule mémoire. Au même instant t1, le signal d'occupation J1 passe à l'état haut. A un instant t2, le signal de commande Va présente un deuxième front descendant. Comme le signal d'occupation de la première cellule mémoire est à l'état haut, le contrôleur ouvre non pas l'interrupteur W1 mais l'interrupteur W2 de façon à stocker la valeur maximale de l'impulsion du signal E sur la deuxième cellule mémoire. Au même instant t2, le signal d'occupation de la deuxième cellule mémoire J2 passe à l'état haut.

A un instant t3, la première cellule mémoire est lue. L'interrupteur R1 est fermé et le signal d'occupation J1 passe à l'état bas. A un instant t4, le signal de commande Va présente un troisième front descendant. Comme la première cellule mémoire est libre (J1 = 0) le contrôleur commande de nouveau l'interrupteur W1 en fermeture, de façon à stocker une nouvelle valeur maximale d'impulsion du signal E dans le condensateur C1 de la première cellule mémoire 52.

Ainsi, selon ce mode de réalisation, le circuit de mémorisation comprend une mémoire tampon 52 constituée de n cellules mémoire analogiques, n étant un entier supérieur ou égal à 1, dans laquelle est stockée une information lors d'une phase d'écriture, la lecture des cellules de la mémoire tampon étant cadencée sur la fréquence d'horloge du convertisseur analogique-numérique et réalisée de manière asynchrone par rapport à l'écriture.

Avantageusement, le dispositif proposé ici permet de disposer d'une architecture électronique adaptée au fonctionnement à très fort flux de photons.

En outre, du fait de l'utilisation d'un convertisseur analogique-numérique particulièrement simple, ce dispositif est également compatible avec des structures de détecteur de photons dans lesquels chaque pixel est divisée en sous-pixels. En effet, lorsque le flux incident est supérieur à 2.10⁷ photons/mm²/s, l'électronique de traitement se sature car les impulsions de courant issues du détecteur sont trop proches et deviennent indiscernables. On peut donc être contraint de subdiviser le pixel initial en sous-pixels et d'associer à chaque sous-pixel une électronique de traitement séparée.

Cette séparation du pixel en sous-pixels se traduit par une augmentation de la taille de l'électronique complète. En effet, chaque sous-pixel doit être associé à une électronique de traitement complète.

En utilisant le circuit 40 ou 40' proposé ici, associé à un convertisseur analogique-numérique classique, l'intégration d'une telle électronique dans une surface inférieure à 2 mm² est possible.

Également, les circuits 40 et 40' proposés ici peuvent être facilement utilisés en relation avec chacun des sous-pixels et être associés à un unique convertisseur analogique-numérique. Dans ce cas, les sorties des cellules mémoire de chacun des sous-pixels sont reliées sur une même sortie OUT qui est la sortie du pixel global. Dans cette dernière variante de sous-pixellisation, le contrôleur est prévu pour réaliser une lecture d'une seule mémoire de chacun des sous-pixels à la fois.

On notera que la réalisation pratique du contrôleur ne sera pas décrite ici plus en détail, celle-ci étant relativement classique en microélectronique.

En outre, la formation d'une seconde ligne à retard 44 pour sélectionner les instants de stockage du signal d'énergie E(t) dans les points mémoires permet d'éviter la perte d'information lors de recouvrements d'impulsions. En effet, l'association d'une ligne à retard 44 à retard faible et d'un soustracteur 42 permet d'obtenir un signal en sortie du soustracteur 42 correspondant sensiblement à la variation du signal d'énergie E(t). On détecte ainsi plus facilement les instants où apparaissent les pics des impulsions (instants où la variation devient négative). Le dispositif proposé ici est donc adapté à tirer profit de l'ensemble des impulsions, et même celles qui sont en recouvrement.

Des modes de réalisation particuliers ont été décrits. Diverses variantes et modifications apparaîtront à l'homme de l'art. Notamment, le circuit proposé ici comprend des amplificateurs, des comparateurs et des soustracteurs dont les bornes pourront être inversées par rapport à ce qui a été décrit, les tensions de seuil de comparaison ou les traitements effectués en sortie de ces éléments étant adaptés en conséquence. En outre, les signaux d'occupation proposés ci-dessus peuvent également fonctionner en inverse de ce qui a été décrit.

## Revendications

1. Dispositif de traitement d'informations délivrées par un détecteur de photons, comprenant :
un premier circuit analogique (2, 3) adapté à générer, sur un premier noeud, un premier signal (E) présentant une série d'impulsions, chaque impulsion ayant une amplitude proportionnelle à l'énergie libérée par une interaction d'un photon dans le détecteur ;
un unique deuxième circuit analogique (42, 44, 46) connecté au premier noeud et agencé pour fournir un deuxième signal (Va) passant d'un premier état à un deuxième état lorsque le premier signal (E) passe par une valeur maximale ; et
un élément de capture comprenant une pluralité de condensateurs (Ci) ayant chacun une première électrode reliée au premier noeud par l'intermédiaire d'un interrupteur d'écriture (Wi) et une seconde électrode reliée à un noeud d'application d'un potentiel de référence, l'élément de capture comprenant en outre un circuit de contrôle (50) recevant le deuxième signal (Va), le circuit de contrôle (50) étant adapté à commander les interrupteurs d'écriture (Wi) de façon à enregistrer la valeur du premier signal (E) dans l'un des condensateurs (Ci) lorsque le deuxième signal (Va) passe du premier au deuxième état,
**caractérisé en ce que** le deuxième circuit analogique comprend un unique soustracteur (42) et un unique comparateur (46), les entrées du soustracteur (42) recevant respectivement le premier signal (E) et le premier signal (E) retardé d'une durée prédéterminée (τ') par une ligne à retard, la sortie du soustracteur (42) étant connectée sur une première entrée du comparateur (46), la deuxième entrée du comparateur (46) recevant une tension de référence (Vt), et la sortie du comparateur (46) fournissant le deuxième signal (Va).

2. Dispositif selon la revendication 1, dans lequel les condensateurs (Ci) ont chacun leur première électrode reliée à un deuxième noeud (OUT) par l'intermédiaire d'un interrupteur de lecture (Ri).

3. Dispositif selon la revendication 2, comprenant en outre un convertisseur analogique-numérique (4) adapté à recevoir une valeur fournie sur le deuxième noeud (OUT).

4. Dispositif selon la revendication 2 ou 3, dans lequel le circuit de contrôle (50) est adapté à commander les interrupteurs de lecture (Ri) de façon à fournir périodiquement sur le deuxième noeud (OUT) l'une des valeurs enregistrées dans les condensateurs (Ci).

5. Dispositif selon l'une quelconque des revendications 1 à 4, dans lequel un indicateur d'occupation (Ji) est associé à chaque condensateur (Ci) de l'élément de capture.

6. Dispositif selon la revendication 5, dans lequel le circuit de contrôle (50) est adapté à commander les interrupteurs d'écriture (Wi) de façon à enregistrer la valeur du premier signal (E) dans l'un des condensateurs (Ci) associés à un indicateur d'occupation (Ji) à un état libre, lorsque le deuxième signal (Va) passe du premier au deuxième état.

7. Dispositif selon l'une quelconque des revendications 1 à 6, dans lequel le circuit de contrôle (50) est adapté à faire fonctionner les condensateurs (Ci) à la manière d'une file de type FIFO.

8. Dispositif selon l'une quelconque des revendications 1 à 7, dans lequel la durée prédéterminée (τ') est inférieure à 10 ns.

## Patentansprüche

1. Vorrichtung zur Verarbeitung von Daten, die durch einen Photonendetektor geliefert werden, welche Folgendes aufweist:
eine erste Analogschaltung (2, 3), welche fähig ist, an einem ersten Knoten ein erstes Signal (E) mit einer Reihe von Impulsen zu erzeugen, wobei jeder Impuls eine Amplitude proportional zu der Energie hat, die durch eine Interaktion eines Photons in dem Detektor freigegeben wird;
eine einzigartige zweite Analogschaltung (42, 44, 46), die mit dem ersten Knoten verbunden ist und konfiguriert ist, um ein zweites Signal (Va) vorzusehen, welche von einem ersten Zustand in einen zweiten Zustand schaltet, wenn das erste Signal (E) einen maximalen Wert überschreitet; und
ein Aufnahmeelement, welches eine Vielzahl von Kondensatoren (Ci) aufweist, die jeweils eine erste Elektrode haben, die mit dem ersten Knoten über einen Schreib- bzw. Write-Schalter (Wi) verbunden ist, und eine zweite Elektrode, die mit einem Knoten zum Anlegen einer Referenzspannung verbunden ist, wobei das Aufnahmeelement weiter eine Steuerschaltung (50) aufweist, die das zweite Signal (Va) aufnimmt, wobei die Steuerschaltung (50) fähig ist, die Write-Schalter (Wi) so zu steuern, dass ein Wert des ersten Signals (E) in einen der Kondensatoren (Ci) aufgenommen wird, wenn das zweite Signal (Va) von dem ersten Zustand in den zweiten Zustand schaltet,
**dadurch gekennzeichnet, dass** die zweite Analogschaltung ein einzigartiges Subtraktionselement (42) und ein einzigartiges Vergleichselement (46) aufweist, wobei die Eingänge des Subtraktionselementes (42) jeweils das erstes Signal (E) und das erste Signal (E) verzögert um eine vorbestimmte Verzögerung (τ') durch eine Verzögerungsleitung aufnehmen, wobei der Ausgang des Subtraktionselementes (42) mit einem ersten Eingang des Vergleichselementes (46) verbunden ist, wobei der zweite Eingang des Vergleichselementes (46) eine Referenzspannung (Vt) aufnimmt, und wobei der Ausgang des Vergleichselementes (46) das zweite Signal (Va) liefert.

2. Vorrichtung nach Anspruch 1, wobei jeweils die erste Elektrode der Kondensatoren (Ci) mit einem zweiten Knoten (OUT) über einen Lese- bzw. Read-Schalter (Ri) verbunden ist.

3. Vorrichtung nach Anspruch 2, die weiter einen Analog/Digital-Wandler (4) hat, der fähig ist, einen Wert aufzunehmen, der an dem zweiten Knoten (OUT) geliefert bzw. angelegt ist.

4. Vorrichtung nach Anspruch 2 oder 3, wobei die Steuerschaltung (50) fähig ist, die Read-Schalter (Ri) so zu steuern, dass sie periodisch an dem zweiten Knoten (OUT) einen der Werte liefern bzw. anlegen, der in die Kondensatoren (Ci) aufgenommen ist.

5. Vorrichtung nach einem der Ansprüche 1 bis 4, wobei ein Belegungsindikator (Ji) mit jedem Kondensator (Ci) des Aufnahmeelementes assoziiert ist.

6. Vorrichtung nach Anspruch 5, wobei die Steuerschaltung (50) fähig ist, die Write-Schalter (Wi) zu steuern, um den Wert (E) des ersten Signals in einen der Kondensatoren (Ci) aufzunehmen, die mit einem Belegungsindikator (Ji) assoziiert sind, und zwar in einem freien Zustand, wenn das zweite Signal (Va) von dem ersten Zustand auf den zweiten Zustand umschaltet.

7. Vorrichtung nach einem der Ansprüche 1 bis 6, wobei die Steuerschaltung (50) fähig ist, die Kondensatoren (Ci) als eine FIFO-Schlange zu betreiben.

8. Vorrichtung nach einem der Ansprüche 1 bis 7, wobei die vorbestimmte Verzögerung (τ') kürzer als 10 ns ist.

## Claims

1. A device for processing data delivered by a photon detector, comprising:
a first analog circuit (2, 3) capable of generating, on a first node, a first signal (E) having a series of pulses, each pulse having an amplitude proportional to the energy released by an interaction of a photon in the detector;
a unique second analog circuit (42, 44, 46) connected to the first node and configured for providing a second signal (Va) switching from a first state to a second state when the first signal (E) crosses a maximum value; and
a capture element comprising a plurality of capacitors (Ci), each having a first electrode connected to the first node via a write switch (Wi) and a second electrode connected to a node of application of a reference voltage, the capture element further comprising a control circuit (50) receiving the second signal (Va), the control circuit (50) being capable of controlling the write switches (Wi) to record the value of the first signal (E) into one of the capacitors (Ci) when the second signal (Va) switches from the first to the second state,
**characterized in that** the second analog circuit comprises a unique subtractor (42) and a unique comparator (46), the inputs of the subtractor (42) receiving respectively the first signal (E) and the first signal (E) delayed by a predetermined delay (τ') by a delay line, the output of the subtractor (42) being connected to a first input of the comparator (46), the second input of the comparator (46) receiving a reference voltage (Vt), and the output of the comparator (46) delivering the second signal (Va).

2. The device of claim 1, wherein the capacitors (Ci) each have their first electrode connected to a second node (OUT) via a read switch (Ri).

3. The device of claim 2, further comprising an analog-to-digital converter (4) capable of receiving a value provided on the second node (OUT).

4. The device of claim 2 or 3, wherein the control circuit (50) is capable of controlling the read switches (Ri) to periodically provide on the second node (OUT) one of the values recorded into the capacitors (Ci).

5. The device of any of claims 1 to 4, wherein an occupancy indicator (Ji) is associated with each capacitor (Ci) of the capture element.

6. The device of claim 5, wherein the control circuit (50) is capable of controlling the write switches (Wi) to record the value (E) of the first signal into one of the capacitors (Ci) associated with an occupancy indicator (Ji) in a free state, when the second signal (Va) switches from the first to the second state.

7. The device of any of claims 1 to 6, wherein the control circuit (50) is capable of operating the capacitors (Ci) as a FIFO-type queue.

8. The device of any of claims 1 to 7, wherein the predetermined delay (τ') is shorter than 10 ns.
